# EUROPEAN PATENT SPECIFICATION

(11) **EP 2 247 035 B1**
(45) Date of publication and mention of the grant of the patent: **14.10.2015**
(21) Application number: 09425159.2
(22) Date of filing: 27.04.2009
(51) Int. Cl.: H04L 12/28

(54) **System for interfacing a mobile device with a content source network and a home network**
System zur Herstellung einer Schnittstelle einer mobilen Vorrichtung mit einem Inhaltsquellennetzwerk und Heimatnetzwerk
Système d'interfaçage d'un dispositif mobile avec un réseau de source de contenu et avec un réseau domestique

(43) Date of publication of application: 03.11.2010
(73) Proprietor: Accenture Global Services Limited, Dublin 4 (IE)
(72) Inventor: Onorato, Orlando, 00174 Rome (IT); De Maria, Pierluca, 00136 Rome (IT); Gagliardi, Giovianni, 00182 Rome (IT)
(74) Representative: Müller-Boré & Partner Patentanwälte PartG mbB

(56) References cited:
- US-A1- 2006 095 472
- US-A1- 2008 139 193
- US-A1- 2009 100 477

## Description

### BACKGROUND

Internet Protocol Television (IPTV) is a system where a digital television service is delivered using an internet protocol over a network infrastructure, which may include delivery by a broadband connection. In IPTV, television content, instead of being delivered through traditional broadcast signals or cable format signals, is distributed by transmitting data packets compliant with the internet protocol. Since IPTV may be distributed through discrete service provider networks, IPTV may guarantee a quality of service (QoS). On the other hand, Internet television is distributed through public networks such as the Internet and does not guarantee a QoS since the content distributors have no control of networks after the initial distribution points.

In receiving IPTV, a home network may have a modem, for example, as a part of a set-top box, for receiving data packets corresponding to IPTV. The home network may play selected media content of IPTV at a television set through a control of the set-top box. However, in selecting media content of IPTV, a set-top box or a remote control of a television set may not be equipped with a user-friendly, easy-to-use interface due to limitations in the hardware or software such as an insufficient RAM or hard disk data storage space, a lack of a keyboard, a lack of adequate interface applications, etc. Further, a set-top box or a remote control of a television set may not be portable and allow a remote controlling of the media content selection from outside a user's residence. Thus, providing a user-friendly, easy-to-use interface for controlling a media content selection for IPTV from even outside a home network of a user may be useful. Media content includes digital data that is transmitted over the network, and may includes video, audio, digital pictures, other data or a combination of these data. In some instances media content may include information related to the media content, such as electronic program guide information, payment information, etc.

US 2008/139193 A1 discloses methods, computer program products, and apparatuses for allowing a user to communicate with a set top box and a media content server through a mobile communication device, such as a cellular phone. The user may be able to request and receive a customer specific interactive programming guide through the mobile communication device. The interactive programming guide may allow the user to search and record media programs, including sending recording commands to a set top box to record a particular media program. The interactive programming guide may also allow the user to order and receive media programs to the mobile communication device.

US 2009/100477 discloses a method and system for ordering content including a mobile device having an ordering interactive interface having available content including linear content and on-demand content. The interactive interface receives a content selection corresponding to the on-demand content from the interactive interface and communicates the selection to a content processing system. The content processing system communicates a control word to the user device. A user device receives the on-demand content corresponding to the selection in response to the control word.

US 2006/095472 discloses a personal media broadcasting system which enables video distribution over a computer network and allows a user to view and control media sources over a computer network from a remote location. A personal broadcaster receives an input from one or more types of media sources, digitizes and compresses the content, and streams the compressed media over a computer network to a media player running on any of a wide range of client devices for viewing the media. The system may allow the user to issue control commands (e.g., "channel up") from the media player to the broadcaster, causing the source device to execute the commands. The broadcaster and the media player may employ several techniques for buffering, transmitting, and viewing the content to improve the user's experience.

An object of the present invention is to provide a system (as in claim 1), a method (as in claim 8) and a computer readable storage medium (as in claim 11) for interfacing a mobile device with a content source network and a home network.

### BRIEF DESCRIPTION OF DRAWINGS

The embodiments of the invention will be described in detail in the following description with reference to the following figures.
Figure 1 illustrates a system interfacing a mobile phone with a content source network and a home network, according to an embodiment of the invention;
Figure 2 illustrates a framework extension, according to an embodiment of the invention;
Figure 3 illustrates a method for interfacing a mobile phone with a content source network and a home network, according to an embodiment of the invention; and
Figure 4 illustrates a block diagram of a computer system configured to implement or execute modules, applications and programs of the system depicted in Figure 1, according to an embodiment of the invention.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent, however, to one of ordinary skill in the art, that the embodiments may be practiced without limitation to these specific details. In some instances, well known methods and structures have not been described in detail so as not to unnecessarily obscure the embodiments.

As referred to in this disclosure, a content source network is a network that provides and transmits media content to a home network of a user in response to instructions received from a mobile phone. A home network is a user's network, and may include devices owned by the user. The home network may be at a residence, at a business, or at any location, and may include a local area network (LAN) that is wireless and/or wired. The media content is transmitted to the home network of the user by transmitting data packets, each of which has a header field with a destination address and a data field with at least a portion of the media content. The header fields are used for processing data packets and may each include at least one of a source internet protocol (IP) address, a destination IP address, a time, and any other data related to processing of data packets including cyclic redundancy check (CRC) bits. In one embodiment, the media content is IPTV media content transmitted to the home network.

As referred to in this disclosure, a cellular network is a network of cells, each for communicating with mobile phones in the cells. A mobile phone as used herein is any device that is configured to connect to a cellular network to send and receive data, which may include voice, multimedia, or other data. The cellular network may be based on a communication standard, such as a Global System for Mobile communications (GSM), Universal Mobile Telecommunications System (UMTS), etc. An example of a mobile phone may be an iPhone, which is made by and sold by Apple, Inc., of Cupertino, CA, and has an easy-to-use, user-friendly interface, for navigating through multiple files, directories, programs, media content, etc.

As referred to in this disclosure, a framework is software, hardware, or a combination of both for performing desired functions. A framework extension is an extension of the framework to add additional functions to the framework and may refer to additional software or hardware or a combination of both that are added to the framework to perform the additional functions. A framework may be a middleware component of a platform for performing desired functions.

According to an embodiment, a framework extension of a content source network converts data of the content source network to an output format supported by a cellular network and presents options for selecting media content or for selecting a remote control instruction to a user of a mobile phone. The options may include a catalog of media content be transmitted to the mobile phone allowing the user to select media content from the catalog. The options may include a catalog of remote control instructions for controlling one or more devices in the home network of the user. A remote control instruction is a command to control a function of a device, such as increase volume, change channel, record, etc. The device may include a television set, a set-top box, a digital recorder, etc.

The framework extension is configured to receive a selected option from the mobile phone via the cellular network and determine a type of the selected option, such as whether the option is a media content selection or a remote control instruction. If a media content selection is made at the mobile phone, the content source network in turn searches for and transmits the selected media content to the home network of the user. In receiving the selected media content, the home network may store the selected media content at a computer readable data storage device for a simultaneous or delayed playing of the selected media content. If a remote control instruction is selected at the mobile phone, the framework extension in the content source network, which is coupled to the cellular network of the mobile phone, may be used to relay the remote control instruction to a device in the home network.

By using a mobile phone to operate as an interface between a home network and a content source network in controlling a selection and transmission of media content or remote control instructions, the user is able to utilize the user-friendly interface of the mobile phone to control media selection and device functions even when the user is away from the home network. Furthermore, a single device can be used to control multiple functions of different devices.

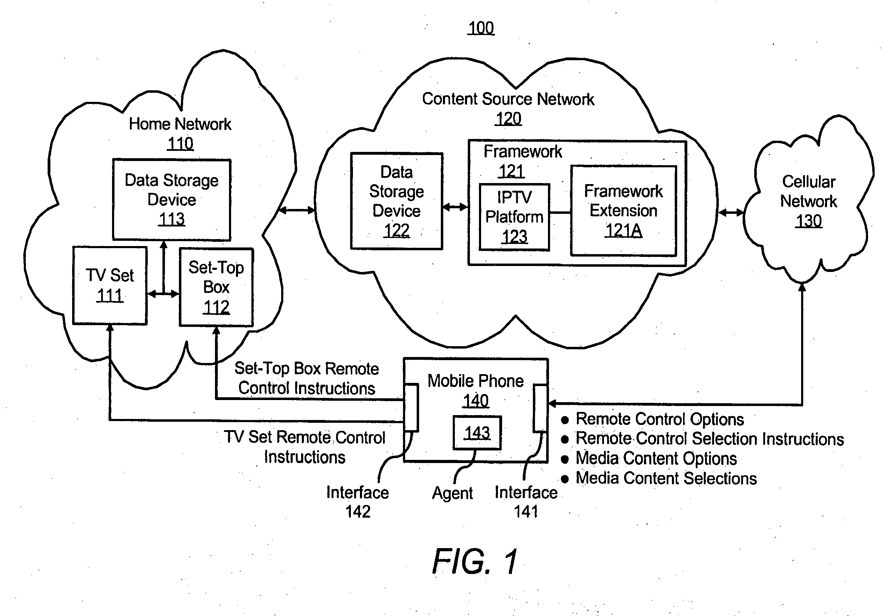

Turning now to figure 1, shown therein is a system 100 for interfacing a mobile phone 140 connected to a cellular network 130 with a content source network 120 and a home network 110. The content source network 120 includes a framework extension 121A configured to transmit information, such as media content or remote control instructions, to the home network 110 in response to an instruction or option selection received from the mobile phone 140 via the cellular network 130, according to an embodiment of the invention. It should be understood that the system 100 may include additional components and that some of the components described herein may be removed and/or modified without departing from a scope of the system 100.

The home network 110 may be any reasonably suitable network that receives media content and plays the media content with one or more devices of the home network 110. For example, the home network 110 may be a LAN including one or more devices at a user's residence such as a television (TV) set 111, a set-top box 112, a computer-readable data storage device 113, etc. The TV set 111 plays the media content. The set-top box 112 receives the media content from the content source network 120 and transmits the received media content to the TV set 111. The computer-readable data storage device 113 stores the received media content for either simultaneous or subsequent playing of the media content at one or more devices of the home network 110. The computer-readable data storage device 113 may be any reasonably suitable device for storing the received media content, such as a hard disk, flash memory, ROM, RAM, etc. The data storage device 113 may be incorporated into another device, such as a media server or other device.

The home network 110 is coupled to the mobile phone 140 through the cellular network 130 and the content source network 120. In response to the content source network 120's receipt of a user's media content selection from the mobile phone 140, the home network 110 receives the selected media content from the content source network 120. In addition, the home network 110 may receive from the content source network 120 remote control instructions to be relayed to the home network 110 for controlling one or more devices of the home network 110. Examples of remote control instructions include adjust speaker volumes of the TV set 111 via TV set control signals, change a TV channel section of the set-top box 112 via set-top box control signals, turn on or off the TV set 111, etc.

The mobile phone 140 includes a cellular interface 141 for sending information, such as the remote control instructions and media content selections, to the content source network 120 via the cellular network 130. The mobile phone 140 may also include an interface 142 to connect to a network or device. For example, when in range or otherwise connected to the home network 110, the mobile phone 140 may send remote control instructions or other information directly to devices in the home network 110 via the interface 142. The interface 142 may be a Bluetooth or Wi-Fi interface.

The mobile phone 140 also includes software, shown as agent 143, that is stored on a computer readable medium and executed by a processor in the mobile phone 140. The agent 143 is configured to receive and store the options, which may include media content selections and remote control instructions, received from the content source network 120. The option and other information may be stored in memory or other well known conventional storage in the mobile phone 140. The agent 143 can present these options to the user, for example, via a display on the mobile phone 140. A user may select an option, and the agent 143 sends the selected option to the content source network 120 via the interface 141. The agent 143 may also provide the user with the ability to search contents from the media content catalog, view trailers, search an electronic program guide, buy contents, subscribe to new packages and use the mobile phone 140 as a traditional remote control to control devices in the home network 110.

The agent 143 may also format content received from the content source network 120 into in a desired display format for the mobile phone 140. The mobile phone 140 receives and transmits to the cellular network 130 instructions of a user, such as an indication of a media content selection, an instruction to initiate or terminate a telephone call, an instruction to retrieve a voice message via the cellular network 130, etc. An application program interface (API) may be used for performing desired functions in addition to communicating with existing operating software and/or applications of the mobile phone 140.

The cellular network 130 includes a network of cells, each one of which has a cell boundary and establishes telephone calls with mobile phones within the cell boundary. The cellular network 130 also forwards data. For example, the cellular network 130 may determine whether an instruction from the mobile phone 140, such as a media content selection by a user of the mobile phone 140, is to be forwarded to the content source network 120, and forwards the instruction to the content source network 120. Also, in receiving data from the content source network 120, the cellular network 130 uses the received data to perform background operations to determine which connected cellular device to send the data.

The content source network 120 includes a framework 121, a computer-readable data storage device 122, and other network devices. In one embodiment, the content source network 120 includes a network configured to distribute media content and other information to the home network 110 using IPTV protocol, and also communicate with the cellular network 130. The content source network 120 may include a broadband network.

The framework 121 in the content source network 120 includes an IPTV platform 123 and a framework extension 121 A. Media content is stored in the data storage device 122. The IPTV platform 123 is configured to provide the media content to devices in the home network 110. The IPTV platform 123 may provide other conventional IPTV services for users in the home network 110, such as providing an electronic program guide, providing video-on-demand, etc.

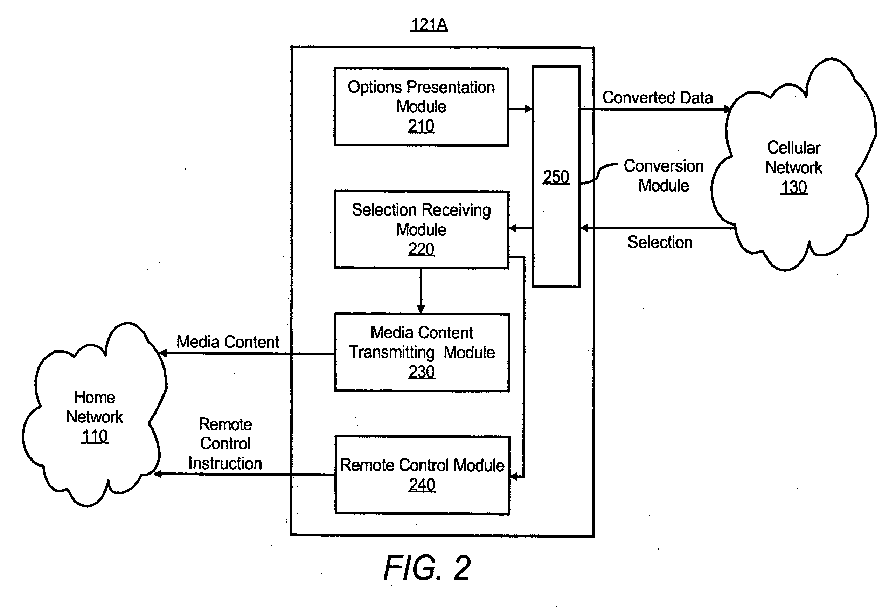

The framework extension 121 A provides additional functionality for the IPTV platform 123 and enables the exchange of data and applications with the cellular network 130 and the mobile phone 140. The framework extension 121 A is shown in figure 2 and includes an options presentation module 210, a selection receiving module 220, a media content transmitting module 230, a remote control module 240, and a conversion module 250. It should be understood that the framework extension 121 A may include additional modules and that some of the modules described herein may be removed and/or modified without departing from a scope of the framework extension 121 A. Also, each module may be implemented as software, hardware, or a combination of both for performing functions of the framework extension 121 A. The modules may be computer programs or portion of a computer program having instructions stored on a computer readable storage medium and performing functions of the framework extension 121 A.

The conversion module 250 operates as a gateway between the cellular network 130 and the framework 121. The conversion module 250 converts outbound data from the content source network 120 into a data format supported by the cellular network 130, and converts inbound data from the cellular network 130 into a data format supported by the content source network 120. For example, the conversion module 250 converts data between IPTV protocol and a cellular protocol, such as UMTS or GSM, which is used by the cellular network 130 and the mobile phone 140. The conversion module 250 may be programmed to convert between other protocols if needed. Although not shown, format conversion may be provided for formatting data as needed from the home network 110 to the content source network 120 or for formatting data as needed from the content source network 120 to the home network 110. The formatting may be performed at gateways within the networks or by other devices.

The options presentation module 210 presents options to a user of the mobile phone 140. The presentation of options includes providing a media content catalog and a remote control instructions catalog to the mobile phone 140 via the cellular network 130. The media content catalog includes a list of media that can be provided by the IPTV platform 123 to a device in the home network 110. The remote control instructions catalog includes a list of remote control instructions that can be provided to devices in the home network 110 to control functions of the devices.

The presentation of options may also include providing to the mobile phone 140 an electronic program guide, video-on-demand options, payment options, rental period options, a purchase option, an option to pick a delivery time of selected media content to the home network 110, etc., and any combination thereof. Other options may also be provided. Data used for the presentation may be stored in the computer-readable data storage device 122 and may include media content, for example, graphics for a movie catalog, and/or an application used for presenting the media content, such as the agent 143 downloaded to the mobile phone 140. In presenting a number of options to a user of the mobile phone 140, the options may be presented in several stages with each stage presenting a different option. For example, after presenting an option to select a movie from a movie catalog, the user may be prompted to choose one of several payment methods. An exemplary method of making a payment is using a prepaid balance of a subscriber identity module (SIM) card of the mobile phone 140.

The selection receiving module 220 receives selections or instructions from the mobile phone 140, and determines the type of selections received from the mobile phone 140. The received selection may include an identification of the type of selection, such as whether the selection is for media content from the media content catalog or whether the selection is for a remote control instruction from the remote control instructions catalog. The agent 143 in the mobile 140 may include a selection type identifier and a description of the selection in the selected option and send the selected option to the framework 121.

The selection receiving module 220 determines whether a selected option received from the mobile phone 140 is a selection of media content to be provided to a device in the home network 110 or whether the selected option is a remote control instruction to be relayed to a device in the home network 110. If the selection from the mobile phone 140 is for media content, the selection is forwarded to the media content transmitting module 230. The received selection may include an identifier of the media content from the catalog. The media content transmitting module 230 searches the computer-readable data storage device 122 to find the identified media content and transmits the selected media content to the home network 110. The transmission of the selected media content to the home network 110 includes a transmission of data packets each having a header field with a destination address corresponding to the home network 110 (for example, a destination IP address) and a data field with a portion of the selected media content. Although shown as part of the framework extension 121 A, the media content transmitting module 230 may alternatively be included in the IPTV platform 123.

If the selection from the mobile phone 140 is for a remote control instruction, the selection is forwarded to the remote control module 240. The selection may include an identification of the remote control instructions from the catalog of remote control instructions. The remote control module 240 transmits the identified remote control instruction to the device in the home network 110 for controlling an operation of the device. The remote control module 240 may convert the remote control instruction to a format understood by the device if needed. Alternatively, the remote control instruction is sent to a router or gateway at the home network 110 that is configured to receive the instruction and format and forward the instruction to the proper device for execution.

The selection receiving module 220 may receive information other than a selection of media content or a selection of a remote control instruction from the mobile phone 140. For example, the selection receiving module 220 may receive a selection from an electronic program guide, a selection of media for video-on-demand, or a payment option. These selections may be forwarded to the home network 110 or a service provider as needed to provide an appropriate response.

The system 100 in figure 1 shows one home network and one mobile phone as an example. It will be apparent to one of ordinary skill in the art that the system 100 may include multiple home networks, mobile phones and cellular networks, and the framework 121 can connect to multiple networks to provide the functionality described above.

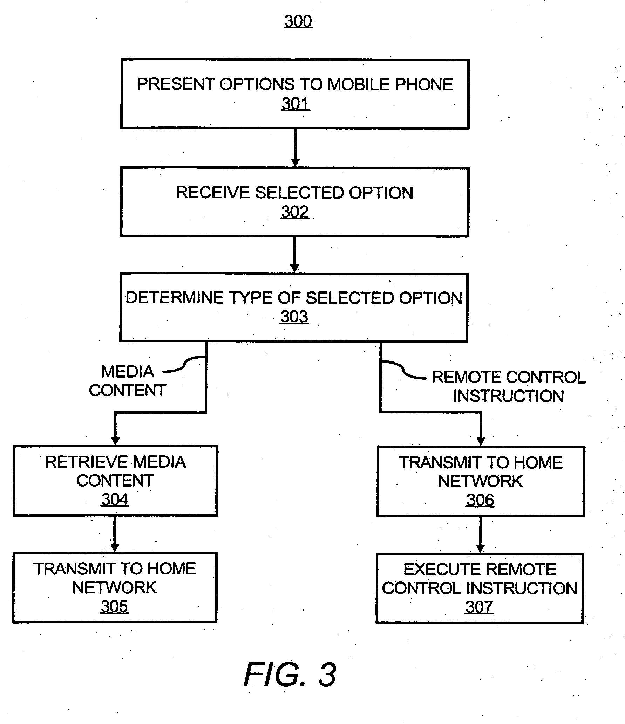

Turning now to figure 3, shown therein is a method 300 for interfacing the mobile phone 140 with the content source network 120 and the home network 110, according to an embodiment of the invention. The method 300 is described with respect to the system 100 by way of example, and it should be apparent to those of ordinary skill in the art that the method may be applied to other systems and steps may be modified or rearranged without departing from a scope of the method 300.

At step 301, the framework 121 in the content source network 120 presents options to the mobile phone 140. For example, the framework 121 transmits options to the mobile phone 140 via the cellular network 130. The options may include a catalog of media content and a catalog of remote control instructions for controlling devices in the home network 110. The framework 121 converts the options to an output format supported by the cellular network 130.

At step 302, the framework 121 in the content source network 120 receives a selected option from the mobile phone 140 via the cellular network 130.

At step 303, the framework 121 determines the type of option selected, such as whether the selected option is for media content or a remote control instruction.

At step 304, if the selected option is for media content, the media content is retrieved from data storage. At step 305, the media content is transmitted to the home network 110, which may be the home network of the user of the mobile phone 140. The media content is received at a device at the home network 110, such as the set-top box 112. Then, the media content may be played by a device at the home network 110.

If the selected option is for a remote control instruction as determined at step 303, then at step 306, the remote control instruction is transmitted to the home network 110. The transmitted remote control instruction identifies the device for which the remote control instruction is to be executed. At step 307, the device executes the remote control instruction. For example, the remote control instruction is sent to the set-top box 112, and instructs the set-top box 112 to play media content that was received from the framework 121.

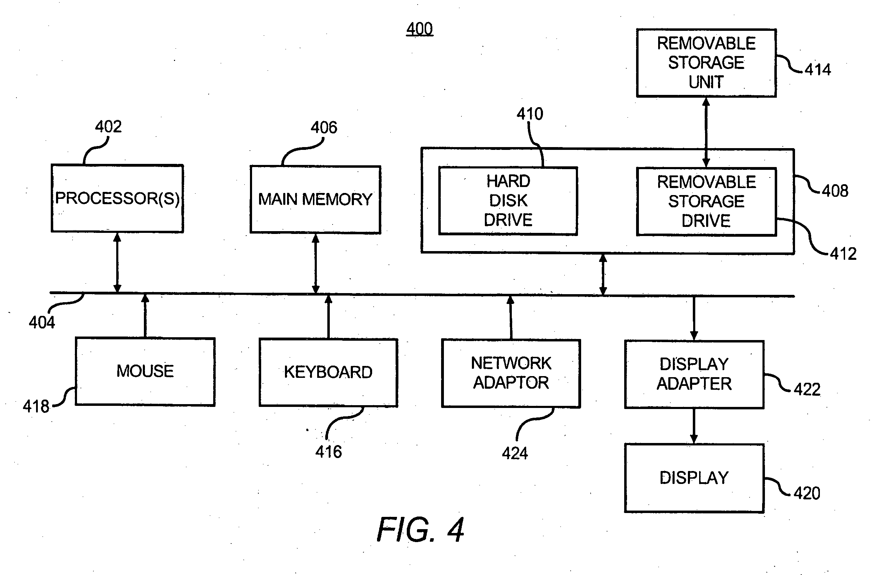

Turning now to figure 4, there is shown a block diagram of a computer system 400 configured to implement or execute modules, applications or programs of one or more of the components of the system 100 depicted in figure 1-3 and/or described herein, according to an embodiment of the invention. The computer system 400 includes a processor 402 that may implement or execute functions of one or more steps described in the method 300 and functions of the system 100. Commands and data from the processor 402 are communicated over a communication bus 404. The computer system 400 also includes a main memory 406, such as a random access memory (RAM), where the program code for the processor 402, may be executed during runtime, and a secondary memory 408. The secondary memory 408 includes, for example, one or more hard disk drives 410 and/or a removable storage drive 412, representing a floppy diskette drive, a magnetic tape drive, a compact disk drive, etc., where a copy of the program code for the method 300 and the system 100 may be stored.

The removable storage drive 410 reads from and/or writes to a removable storage unit 414 in a well-known manner. User input and output devices may include a keyboard 416, a mouse 418, and a display 420. A display adaptor 422 may interface with the communication bus 404 and the display 420 and may receive display data from the processor 402 and convert the display data into display commands for the display 420. In addition, the processor(s) 402 may communicate over a network, for instance, the Internet, LAN, etc., through a network adaptor 424.

It will be apparent to one of ordinary skill in the art that other known electronic components may be added or substituted in the computer system 400. It should also be apparent that one or more of the components depicted in figure 4 may be optional (for instance, user input devices, secondary memory, etc.).

While exemplary features and embodiments of figures 1-4 have been explained within the context of each feature and embodiment, any one or all of the exemplary features and embodiments of the invention may be applied and is incorporated in any and all of the embodiments of the invention unless clearly contradictory. While the embodiments have been described with reference to examples, those skilled in the art will be able to make various modifications to the described embodiments without departing from the scope of the claimed embodiments.

Exemplary, an aspect of the present application my relate to a system configured to interface a mobile device with a content source network and a home network, the system comprising:
an options presentation module configured to convert data of the content source network to an output format supported by a cellular network coupled to the mobile device and to transmit the converted data to the mobile device via the cellular network, wherein the converted data includes a plurality of options presentable by the mobile device to a user, and the plurality of options include an option to select a media content and an option to send a remote control instruction to be relayed to a home network of the user to control a device in the home network;
a selection receiving module configured to receive through the cellular network an indication of a selected option of the plurality of options from the mobile device and to determine whether the selected option is the option to select a media content or the option to send a remote control instruction;
in response to the selection receiving module determining the selected option is the option to select a media content, a media content transmitting module configured to transmit a media content identified by the selected option to the home network, wherein the transmission of the media content includes a transmission of at least one data packet having a header field with a destination address corresponding to the home network and a data field with at least a portion of the media content; and
in response to the selection receiving module determining the selected option is the option to send a remote control instruction, a remote control module configured to transmit a remote control instruction identified by the selected option to the device in the home network.

Advantageously, the present application provides an improved man-machine interaction, in particular an improved man-machine interface in the form of e.g. a graphical user interface. Thereby, the content of the source network is provided to the user in an easily understandable manner. Hence, the user is informed about the internal state of the source network. In addition, an improved way of administering and/or configuring the of a device in the network is provided.

Exemplary, the system may further comprise:
data storage storing a plurality of media content and a catalog of the stored media content, and the converted data transmitted to the mobile device includes the catalog.

Exemplary, the option to select a media content may include identification of a media content from the catalog.

Exemplary, the media content transmitting module may be configured to retrieve the media content from the data storage using the identification of the media content in the selected option for transmission to the home network.

Exemplary, the data storage may store a catalog of remote control instructions, and the converted data transmitted to the mobile device may include the catalog of remote control instructions.

Exemplary, the mobile device may be configured to present the catalog of remote control instructions to the user, and the option to send a remote control instruction may include an identification of at least one of the remote control instructions from the catalog of remote control instructions.

Exemplary, the at least one remote control instruction may be at least one of an instruction to increase volume, an instruction to change a selection of a television channel, and an instruction to turn on or off.

Exemplary, the device to be controlled by the remote control instruction may comprise at least one of a television, set top box, digital video recorder, and a DVD player.

Exemplary, the selected option received by the selection receiving module may include data identifying whether the selected option is the option to select a media content or the option to send a remote control instruction.

Exemplary, the content source network may include an IPTV network.

Exemplary, an aspect of the present application may relate to a method for interfacing a mobile device with a content source network and a home network, the method comprising:
converting data of the content source network to an output format supported by a cellular network coupled to the mobile device, wherein the converted data includes a plurality of options presentable by the mobile device to a user, and the plurality of options include an option to select a media content and an option to send a remote control instruction to be relayed to a home network of the user to control a device in the home network;
transmitting the converted data to the mobile device via the cellular network;
receiving through the cellular network an indication of a selected option of the plurality of options from the mobile device;
determining whether the selected option is the option to select a media content or the option to send a remote control instruction;
in response to determining the selected option is the option to select a media content, transmitting a media content identified by the selected option to the home network, wherein the transmission of the media content includes a transmission of at least one data packet having a header field with a destination address corresponding to the home network and a data field with at least a portion of the media content; and
in response to determining the selected option is the option to send a remote control instruction, transmitting a remote control instruction identified by the selected option to the device in the home network.

Exemplary, the method may further comprise:
storing a catalog of media content stored in the content source network,
   wherein the converted data transmitted to the mobile device includes the catalog of media content.

Exemplary, the option to select a media content may comprise an identification of a media content from the catalog.

Exemplary, the method may further comprise:
storing a catalog of remote control instructions, and the converted data transmitted to the mobile device includes the catalog of remote control instructions.

Exemplary, the method may further comprise:
presenting the catalog of remote control instructions to the user at the mobile device, and the option to send a remote control instruction includes an identification of at least one of the remote control instructions from the catalog of remote control instructions.

Exemplary, the at least one remote control instruction may be at least one of an instruction to increase volume, an instruction to change a selection of a television channel, and an instruction to turn on or off.

Exemplary, the method may be performed in the content source network.

Exemplary, one aspect of the present application may relate to a computer readable storage medium including instructions that when executed by a computer system perform a method comprising:
converting data of a content source network to an output format supported by a cellular network coupled to a mobile device, wherein the converted data includes a plurality of options presentable by the mobile device to a user, and the plurality of options include an option to select a media content and an option to send a remote control instruction to be relayed to a home network of the user to control a device in the home network;
transmitting the converted data to the mobile device via the cellular network;
receiving through the cellular network an indication of a selected option of the plurality of options from the mobile device;
determining whether the selected option is the option to select a media content or the option to send a remote control instruction;
in response to determining the selected option is the option to select a media content, transmitting a media content identified by the selected option to the home network, wherein the transmission of the media content includes a transmission of at least one data packet having a header field with a destination address corresponding to the home network and a data field with at least a portion of the media content; and
in response to determining the selected option is the option to send a remote control instruction, transmitting a remote control instruction identified by the selected option to the device in the home network.

Exemplary, the method, particularly the method according to the computer readable storage medium which is executed by the computer system may further comprise:
storing a catalog of media content stored in the content source network, wherein the converted data transmitted to the mobile device includes the catalog of media content.

Exemplary, the method, particularly the method according to the computer readable storage medium which is executed by the computer system may further comprise:
storing a catalog of remote control instructions, and the converted data transmitted to the mobile device includes the catalog of remote control instructions.

The present invention may also relate to a product, in particular to a computer program product preferably stored on a computer readable memory and/or provided as a signal and/or as a data stream, comprising computer readable instructions, which when loaded in the memory of a computer and executed by the computer urge the computer to carry out the method according to the present application as described above.

In view of the above, description, one or more single features of the above described aspects and/or examples may be extracted from the above described aspects and/or examples and combined to further aspects and/or examples.

## Claims

1. A system (100) configured to interface a mobile device (140) with a content source network (120) and a home network (110), the system (100) comprising:
an options presentation module (210) configured to convert data of the content source network (120) to an output format supported by a cellular network (130) coupled to the mobile device (140) and to transmit the converted data to the mobile device (140) via the cellular network (130),
- wherein the converted data includes a plurality of options presentable by the mobile device (140) to a user, and the plurality of options include an option to select a media content and multiple options to send remote control instructions to be relayed to a home network (110) of the user to control a plurality of different devices in the home network (110), and
- wherein the plurality of options further include payment options, one of the payment options being to make a payment using a prepaid balance of a subscriber identity module card of the mobile device (140);
a data storage (122) storing a catalog of the remote control instructions, wherein the converted data transmitted to the mobile device (140) includes the catalog of the remote control instructions,
- wherein the remote control instructions comprise an instruction to increase volume, an instruction to change a selection of a television channel, and an instruction to turn on or off;
a selection receiving module (220) configured to receive through the cellular network (130) an indication of a selected option of the plurality of options from the mobile device (140) and to determine whether the selected option is the option to select a media content or one of the multiple options to send remote control instructions to a device of the plurality of different devices,
- wherein the selected option includes an identification of the type of selection and a description of the selection;
in response to the selection receiving module (220) determining the selected option is the option to select a media content, a media content transmitting module (230) configured to transmit a media content identified by the selected option to the home network (110),
wherein the transmission of the media content includes a transmission of at least one data packet having a header field with a destination address corresponding to the home network (110) and a data field with at least a portion of the media content; and
in response to the selection receiving module (220) determining the selected option is one of the multiple options to send remote control instructions, a remote control module (240) configured to transmit a remote control instruction identified by the selected option to the device of the plurality of different devices in the home network (110) corresponding to the remote control instruction for the selected option,
wherein the remote control instruction identifies the device for which the remote control instruction is to be executed;
wherein the mobile device (140) includes:
- a cellular interface (141) configured to send the indication of the selected option via the cellular network to the content source network (120), and
- a direct interface (142) to connect to the device of the plurality of different devices when the mobile device (140) is connected to the home network (110), wherein the direct interface (142) is a Bluetooth or Wi-Fi interface;
- wherein, when connected to the home network (110), the mobile device (140) is configured to send remote control instructions directly to the device of the plurality of different devices via the direct interface (142).

2. The system (100) of claim 1, further comprising:
data storage (122) storing a plurality of media content and a catalog of the stored media content, and the converted data transmitted to the mobile device (140) includes the catalog.

3. The system (100) of claim 2, wherein the option to select a media content includes identification of a media content from the catalog.

4. The system (100) of claim 2 or 3, wherein the media content transmitting module (230) is configured to retrieve the media content from the data storage (122) using the identification of the media content in the selected option for transmission to the home network (110).

5. The system (100) of claim 1, wherein the mobile device (140) is configured to present the catalog of the remote control instructions to the user, and each option to send a remote control instruction includes an identification of at least once of the remote control instructions from the catalog of the remote control instructions.

6. The system (100) of any one of the preceding claims, wherein the different devices to be controlled by the remote control instructions comprise a television (111), set top box (112), digital video recorder, and a DVD player.

7. The system (100) of any one of the preceding claims, wherein the content source network (120) includes an IPTV network.

8. A method for interfacing a mobile device (140) with a content source network (120) and a home network (110), the method comprising:
converting data of the content source network (120) to an output format supported by a cellular network (130) coupled to the mobile device (140),
- wherein the converted data includes a plurality of options presentable by the mobile device (140) to a user, and the plurality of options include an option to select a media content and multiple options to send remote control instructions to be relayed to a home network (110) of the user to control a plurality of different devices in the home network (110),
- wherein the plurality of options further include payment options, one of the payment options being to make a payment using a prepaid balance of a subscriber identity module card of the mobile device (140), and
- wherein the remote control instructions comprise an instruction to increase volume, an instruction to change a selection of a television channel, and an instruction to turn on or off;
transmitting the converted data to the mobile device (140) via the cellular network (130);
receiving through the cellular network (130) an indication of a selected option of the plurality of options from the mobile device (140), wherein the selected option includes an identification of the type of selection and a description of the selection;
determining whether the selected option is the option to select a media content or one of the multiple options to send remote control instructions to a device of the plurality of different devices;
in response to determining the selected option is the option to select a media content, transmitting a media content identified by the selected option to the home network (110), wherein the transmission of the media content includes a transmission of at least one data packet having a header field with a destination address corresponding to the home network (110) and a data field with at least a portion of the media content; and
in response to determining the selected option is one of the options to send remote control instructions, transmitting a remote control instruction identified by the selected option to the device of the plurality of different devices in the home network (110) corresponding to the remote control instruction for the selected option,
- wherein the remote control instruction identifies the device for which the remote control instruction is to be executed; and
wherein the mobile device (140) includes:
- a cellular interface (141) configured to send the indication of the selected option via the cellular network to the content source network (120), and
- a direct interface (142) to connect to the device of the plurality of different devices when the mobile device (140) is connected to the home network (110), wherein the direct interface (142) is a Bluetooth or Wi-Fi interface;
- wherein, when connected to the home network (110), the mobile device (140) is configured to send remote control instructions directly to the device of the plurality of different devices via the direct interface (142).

9. The method of claim 8, further comprising:
storing a catalog of media content stored in the content source network (120), wherein the converted data transmitted to the mobile device (140) includes the catalog of media content.

10. The method of claim 8 or 9, wherein the method is performed in the content source network (120).

11. A computer readable storage medium including instructions that when executed by a computer system (100) perform a method comprising:
converting data of a content source network (120) to an output format supported by a cellular network (130) coupled to a mobile device (140),
- wherein the converted data includes a plurality of options presentable by the mobile device (140) to a user, and the plurality of options include an option to select a media content and multiple options to send remote control instructions to be relayed to a home network (110) of the user to control a plurality of different devices in the home network (110),
- wherein the plurality of options further include payment options, one of the payment options being to make a payment using a prepaid balance of a subscriber identity module card of the mobile device (140), and
- wherein the remote control instructions comprise an instruction to increase volume, an instruction to change a selection of a television channel, and an instruction to turn on or off;
transmitting the converted data to the mobile device (140) via the cellular network (130);
receiving through the cellular network (130) an indication of a selected option of the plurality of options from the mobile device (140), wherein the selected option includes an identification of the type of selection and a description of the selection;
determining whether the selected option is the option to select a media content or one of the multiple options to send remote control instructions to a device of the plurality of different devices;
in response to determining the selected option is the option to select a media content, transmitting a media content identified by the selected option to the home network (110), wherein the transmission of the media content includes a transmission of at least one data packet having a header field with a destination address corresponding to the home network (110) and a data field with at least a portion of the media content; and
in response to determining the selected option is one of the multiple options to send remote control instructions, transmitting a remote control instruction identified by the selected option to the device of the plurality of different devices in the home network (110) corresponding to the remote control instruction for the selected option,
- wherein the remote control instruction identifies the device for which the remote control instruction is to be executed; and
wherein the mobile device (140) includes:
- a cellular interface (141) configured to send the indication of the selected option via the cellular network to the content source network (120), and
- a direct interface (142) to connect to the device of the plurality of different devices when the mobile device (140) is connected to the home network (110), wherein the direct interface (142) is a Bluetooth or Wi-Fi interface;
- wherein, when connected to the home network (110), the mobile device (140) is configured to send remote control instructions directly to the device of the plurality of different devices via the direct interface (142).

## Patentansprüche

1. System, das konfiguriert ist, um eine Schnittstelle zu einer mobilen Vorrichtung (140) mit einem Inhaltsquellennetzwerk (120) und Heimatnetzwerk (110) zu bilden, wobei das System (100) umfasst:
ein Optionen-Präsentationsmodul (210), das konfiguriert ist, um Daten des Inhaltsquellennetzwerks (120) in ein Ausgabeformat zu konvertieren, das von einem zellularen Netzwerk (130), das mit der mobilen Vorrichtung (140) gekoppelt ist, unterstützt wird, und die konvertierten Daten über das zellulare Netzwerk (130) an die mobile Vorrichtung (140) zu übertragen,
- wobei die konvertierten Daten eine Vielzahl an Optionen umfassen, die einem Benutzer durch die mobile Vorrichtung (140) präsentierbar sind, und die Vielzahl von Optionen eine Option, um einen Medieninhalt auszuwählen, und mehrere Optionen, um Fernsteueranweisungen, die an ein Heimatnetzwerk (110) des Benutzers weitergegeben werden sollen, zu senden, umfasst, um eine Vielzahl verschiedener Vorrichtungen in dem Heimatnetzwerk (110) zu steuern, und
- wobei die Vielzahl von Optionen ferner Bezahloptionen umfasst, wobei eine der Bezahloptionen darin besteht, eine Bezahlung unter Verwendung eines vorab bezahlten Guthabens einer Teilnehmerkennungsmodulkarte der mobilen Vorrichtung (140) vorzunehmen;
einen Datenspeicher (122), der eine Liste der Fernsteueranweisungen speichert, wobei die an die mobile Vorrichtung (140) übertragenen konvertierten Daten die Liste der Fernsteueranweisungen umfassen,
- wobei die Fernsteueranweisungen eine Anweisung zur Erhöhung der Lautstärke, eine Anweisung zur Änderung einer Auswahl eines Fernsehkanals und eine Anweisung zum Ein- oder Ausschalten umfassen;
ein Auswahlempfangsmodul (220), das konfiguriert ist, um durch das zellulare Netzwerk (130) eine Anzeige einer ausgewählten Option der Vielzahl von Optionen von der mobilen Vorrichtung (140) zu empfangen und zu bestimmen, ob die ausgewählte Option die Option zum Auswählen eines Medieninhalts oder eine der mehreren Optionen zum Senden von Fernsteueranweisungen an eine Vorrichtung der Vielzahl verschiedener Vorrichtungen ist,
- wobei die ausgewählte Option eine Identifikation der Art der Auswahl und eine Beschreibung der Auswahl umfasst;
ein Medieninhalt-Übertragungsmodul (230), das konfiguriert ist, um ansprechend darauf, dass das Auswahlempfangsmodul (220) bestimmt, dass die ausgewählte Option die Option zum Auswählen eines Medieninhalts ist, einen Medieninhalt, der von der ausgewählten Option identifiziert wird, an das Heimatnetzwerk (110) zu übertragen,
wobei die Übertragung des Medieninhalts eine Übertragung wenigstens eines Datenpakets mit einem Anfangsblockfeld mit einer Zieladresse, die dem Heimatnetzwerk (110) entspricht, und einem Datenfeld mit wenigstens einem Teil des Medieninhalts umfasst; und
ein Fernsteuermodul (240), das konfiguriert ist, um ansprechend darauf, dass das Auswahlempfangsmodul (220) bestimmt, dass die ausgewählte Option eine der mehreren Optionen zum Senden entfernter Steueranweisungen ist, eine Fernsteueranweisung, die durch die ausgewählte Option identifiziert wird, an die Vorrichtung der Vielzahl verschiedener Vorrichtungen in dem Heimatnetzwerk (110) zu übertragen, die der Fernsteueranweisung für die ausgewählte Option entspricht,
wobei die Fernsteueranweisung die Vorrichtung identifiziert, für welche die Steueranweisung ausgeführt werden soll;
wobei die mobile Vorrichtung (140) umfasst:
- eine zellulare Schnittstelle (141), die konfiguriert ist, um die Anzeige der ausgewählten Option über das zellulare Netzwerk an das Inhaltsquellennetzwerk (120) zu senden, und
- eine direkte Schnittstelle (142), um die Vorrichtung der Vielzahl verschiedener Vorrichtungen zu verbinden, wenn die mobile Vorrichtung (140) mit dem Heimatnetzwerk (110) verbunden ist, wobei die direkte Schnittstelle (142) eine Bluetooth- oder Wifi-Schnittstelle ist;
- wobei die mobile Vorrichtung (140), wenn sie mit dem Heimatnetzwerk (110) verbunden ist, konfiguriert ist, um Fernsteueranweisungen über die direkte Schnittstelle (142) direkt an die Vorrichtung der Vielzahl verschiedener Vorrichtungen zu senden.

2. System (100) nach Anspruch 1, das ferner umfasst:
einen Datenspeicher (122) zum Speichern einer Vielzahl von Medieninhalten und einer Liste der gespeicherten Medieninhalte und wobei die an die mobile Vorrichtung (140) übertragenen konvertierten Daten die Liste umfassen.

3. System (100) nach Anspruch 2, wobei die Option zum Auswählen eines Medieninhalts die Identifikation von Medieninhalt aus der Liste umfasst.

4. System (100) nach Anspruch 2 oder 3, wobei das Medieninhalt-Übertragungsmodul (230) konfiguriert ist, um den Medieninhalt unter Verwendung der Identifikation des Medieninhalts in der ausgewählten Option für die Übertragung an das Heimatnetzwerk (110) aus dem Datenspeicher abzurufen.

5. System (100) nach Anspruch 1, wobei die mobile Vorrichtung (140) konfiguriert ist, um dem Benutzer die Liste der Fernsteueranweisungen zu präsentieren, und wobei jede Option zum Senden einer Fernsteueranweisung eine Identifikation wenigstens einer der Fernsteueranweisungen aus der Liste der Fernsteueranweisungen umfasst.

6. System (100) nach einem der vorhergehenden Ansprüche, wobei die verschiedenen Vorrichtungen, die durch die Fernsteueranweisungen gesteuert werden sollen, einen Fernseher (111), eine Set-Top-Box (112), einen digitalen Videorekorder und einen DVD-Spieler umfassen.

7. System (100) nach einem der vorhergehenden Ansprüche, wobei das Inhaltsquellennetzwerk (120) ein IPTV-Netzwerk umfasst.

8. Verfahren, um eine mobile Vorrichtung (140) über eine Schnittstelle mit einem Inhaltsquellennetzwerk (120) und einem Heimatnetzwerk (110) zu verbinden, wobei das Verfahren umfasst:
Konvertieren von Daten des Inhaltsquellennetzwerks (120) in ein Ausgabeformat, das von einem zellularen Netzwerk (130), das mit der mobilen Vorrichtung (140) gekoppelt ist, unterstützt wird,
- wobei die konvertierten Daten eine Vielzahl an Optionen umfassen, die einem Benutzer durch die mobile Vorrichtung (140) präsentierbar sind, und die Vielzahl von Optionen eine Option, um einen Medieninhalt auszuwählen, und mehrere Optionen, um Fernsteueranweisungen, die an ein Heimatnetzwerk (110) des Benutzers weitergegeben werden sollen, zu senden, umfasst, um eine Vielzahl verschiedener Vorrichtungen in dem Heimatnetzwerk (110) zu steuern, und
- wobei die Vielzahl von Optionen ferner Bezahloptionen umfasst, wobei eine der Bezahloptionen darin besteht, eine Bezahlung unter Verwendung eines vorab bezahlten Guthabens einer Teilnehmerkennungsmodulkarte der mobilen Vorrichtung (140) vorzunehmen;
- wobei die Fernsteueranweisungen eine Anweisung zur Erhöhung der Lautstärke, eine Anweisung zur Änderung einer Auswahl eines Fernsehkanals und eine Anweisung zum Ein- oder Ausschalten umfassen;
Übertragen der konvertierten Daten über das zellulare Netzwerk (130) an die mobile Vorrichtung (140);
Empfangen einer Anzeige einer ausgewählten Option der Vielzahl von Optionen durch das zellulare Netzwerk (130) von der mobilen Vorrichtung (140), wobei die ausgewählte Option eine Identifikation der Art der Auswahl und eine Beschreibung der Auswahl umfasst;
Bestimmen, ob die ausgewählte Option, die Option zum Auswählen eines Medieninhalts oder eine der mehreren Optionen zum Senden von Fernsteueranweisungen an eine Vorrichtung der Vielzahl verschiedener Vorrichtungen ist,
ansprechend auf die Bestimmung, dass die ausgewählte Option die Option zum Auswählen eines Medieninhalts ist, Übertragen eines Medieninhalts, der von der ausgewählten Option identifiziert wird, an das Heimatnetzwerk (110), wobei die Übertragung des Medieninhalts eine Übertragung wenigstens eines Datenpakets mit einem Anfangsblockfeld mit einer Zieladresse, die dem Heimatnetzwerk (110) entspricht, und einem Datenfeld mit wenigstens einem Teil des Medieninhalts umfasst; und
ansprechend auf die Bestimmung, dass die ausgewählte Option eine der Optionen zum Senden von Fernsteueranweisungen ist, Übertragen einer Fernsteueranweisung, die von der ausgewählten Option identifiziert wird, an die Vorrichtung der Vielzahl verschiedener Vorrichtungen in dem Heimatnetzwerk (110), die der Fernsteueranweisung für die ausgewählte Option entspricht,
- wobei die Fernsteueranweisung die Vorrichtung, für welche die Fernsteueranweisung ausgeführt werden soll, identifiziert; und
wobei die mobile Vorrichtung (140) umfasst:
- eine zellulare Schnittstelle (141), die konfiguriert ist, um die Anzeige der ausgewählten Option über das zellulare Netzwerk an das Inhaltsquellennetzwerk (120) zu senden, und
- eine direkte Schnittstelle (142), um die Vorrichtung der Vielzahl verschiedener Vorrichtungen zu verbinden, wenn die mobile Vorrichtung (140) mit dem Heimatnetzwerk (110) verbunden ist, wobei die direkte Schnittstelle (142) eine Bluetooth- oder Wifi-Schnittstelle ist;
- wobei die mobile Vorrichtung (140), wenn sie mit dem Heimatnetzwerk (110) verbunden ist, konfiguriert ist, um Fernsteueranweisungen über die direkte Schnittstelle (142) direkt an die Vorrichtung der Vielzahl verschiedener Vorrichtungen zu senden.

9. Verfahren nach Anspruch 8, das ferner umfasst:
Speichern einer Liste mit Medieninhalten, die in dem Inhaltsquellennetzwerk (120) gespeichert sind, wobei die an die mobile Vorrichtung (140) übertragenen konvertierten Daten die Liste der Medieninhalte umfassen.

10. Verfahren nach Anspruch 8 oder 9, wobei das Verfahren in dem Inhaltsquellennetzwerk (120) durchgeführt wird.

11. Computerlesbares Speichermedium, das Anweisungen umfasst, die, wenn sie von einem Computersystem (100) ausgeführt werden, ein Verfahren durchführen, das umfasst:
Konvertieren von Daten eines Inhaltsquellennetzwerks (120) in ein Ausgabeformat, das von einem zellularen Netzwerk (130), das mit einer mobilen Vorrichtung (140) gekoppelt ist, unterstützt wird,
- wobei die konvertierten Daten eine Vielzahl an Optionen umfassen, die einem Benutzer durch die mobile Vorrichtung (140) präsentierbar sind, und die Vielzahl von Optionen eine Option, um einen Medieninhalt auszuwählen, und mehrere Optionen, um Fernsteueranweisungen, die an ein Heimatnetzwerk (110) des Benutzers weitergegeben werden sollen, zu senden, umfasst, um eine Vielzahl verschiedener Vorrichtungen in dem Heimatnetzwerk (110) zu steuern, und
- wobei die Vielzahl von Optionen ferner Bezahloptionen umfasst, wobei eine der Bezahloptionen darin besteht, eine Bezahlung unter Verwendung eines vorab bezahlten Guthabens einer Teilnehmerkennungsmodulkarte der mobilen Vorrichtung (140) vorzunehmen;
- wobei die Fernsteueranweisungen eine Anweisung zur Erhöhung der Lautstärke, eine Anweisung zur Änderung einer Auswahl eines Fernsehkanals und eine Anweisung zum Ein- oder Ausschalten umfassen;
Übertragen der konvertierten Daten über das zellulare Netzwerk (130) an die mobile Vorrichtung (140);
Empfangen einer Anzeige einer ausgewählten Option der Vielzahl von Optionen durch das zellulare Netzwerk (130) von der mobilen Vorrichtung (140), wobei die ausgewählte Option eine Identifikation der Art der Auswahl und eine Beschreibung der Auswahl umfasst;
Bestimmen, ob die ausgewählte Option, die Option zum Auswählen eines Medieninhalts oder eine der mehreren Optionen zum Senden von Fernsteueranweisungen an eine Vorrichtung der Vielzahl verschiedener Vorrichtungen ist,
ansprechend auf die Bestimmung, dass die ausgewählte Option die Option zum Auswählen eines Medieninhalts ist, Übertragen eines Medieninhalts, der von der ausgewählten Option identifiziert wird, an das Heimatnetzwerk (110), wobei die Übertragung des Medieninhalts eine Übertragung wenigstens eines Datenpakets mit einem Anfangsblockfeld mit einer Zieladresse, die dem Heimatnetzwerk (110) entspricht, und einem Datenfeld mit wenigstens einem Teil des Medieninhalts umfasst; und
ansprechend auf die Bestimmung, dass die ausgewählte Option eine der mehreren Optionen zum Senden von Fernsteueranweisungen ist, Übertragen einer Fernsteueranweisung, die von der ausgewählten Option identifiziert wird, an die Vorrichtung der Vielzahl verschiedener Vorrichtungen in dem Heimatnetzwerk (110), die der Fernsteueranweisung für die ausgewählte Option entspricht,
- wobei die Fernsteueranweisung die Vorrichtung, für welche die Fernsteueranweisung ausgeführt werden soll, identifiziert; und
wobei die mobile Vorrichtung (140) umfasst:
- eine zellulare Schnittstelle (141), die konfiguriert ist, um die Anzeige der ausgewählten Option über das zellulare Netzwerk an das Inhaltsquellennetzwerk (120) zu senden, und
- eine direkte Schnittstelle (142), um die Vorrichtung der Vielzahl verschiedener Vorrichtungen zu verbinden, wenn die mobile Vorrichtung (140) mit dem Heimatnetzwerk (110) verbunden ist, wobei die direkte Schnittstelle (142) eine Bluetooth- oder Wifi-Schnittstelle ist;
- wobei die mobile Vorrichtung (140), wenn sie mit dem Heimatnetzwerk (110) verbunden ist, konfiguriert ist, um Fernsteueranweisungen über die direkte Schnittstelle (142) direkt an die Vorrichtung der Vielzahl verschiedener Vorrichtungen zu senden.

## Revendications

1. Système (100) configuré pour interfacer un dispositif mobile (140) avec un réseau de source de contenu (120) et un réseau domestique (110), le système (100) comprenant :
un module de présentation d'options (210) configuré pour convertir des données du réseau de source de contenu (120) en un format de sortie supporté par un réseau cellulaire (130) accouplé au dispositif mobile (140) et pour transmettre les données converties au dispositif mobile (140) par le biais du réseau cellulaire (130),
- dans lequel les données converties incluent une pluralité d'options présentables par le dispositif mobile (140) à un utilisateur, et la pluralité d'options inclut une option de sélectionner un contenu multimédia et de multiples options d'envoyer des instructions de télécommande devant être relayées à un réseau domestique (110) de l'utilisateur pour commander une pluralité de dispositifs différents dans le réseau domestique (110), et
- dans lequel la pluralité d'options inclut en outre des options de paiement, une des options de paiement étant de faire un paiement en utilisant un crédit prépayé d'une carte de module d'identité d'abonné du dispositif mobile (140) ;
un stockage de données (122) stockant un catalogue des instructions de télécommande, dans lequel les données converties transmises au dispositif mobile (140) incluent le catalogue des instructions de télécommande,
- dans lequel les instructions de télécommande comprennent une instruction d'augmenter le volume, une instruction de changer une sélection d'une chaîne de télévision et une instruction d'allumer ou d'éteindre ;
un module de réception de sélection (220) configuré pour recevoir à travers le réseau cellulaire (130) une indication d'une option sélectionnée de la pluralité d'options du dispositif mobile (140) et pour déterminer si l'option sélectionnée est l'option de sélectionner un contenu multimédia ou une des multiples options d'envoyer des instructions de télécommande à un dispositif de la pluralité de dispositifs différents,
- dans lequel l'option sélectionnée inclut une identification du type de sélection et une description de la sélection ;
en réponse au module de réception de sélection (220) déterminant que l'option sélectionnée est l'option de sélectionner un contenu multimédia, un module de transmission de contenu multimédia (230) configuré pour transmettre un contenu multimédia identifié par l'option sélectionnée au réseau domestique (110),
dans lequel la transmission du contenu multimédia inclut une transmission d'au moins un paquet de données ayant un champ d'en-tête avec une adresse de destination correspondant au réseau domestique (110) et un champ de données avec au moins une portion du contenu multimédia ; et
en réponse au module de réception de sélection (220) déterminant que l'option sélectionnée est une des multiples options d'envoyer des instructions de télécommande, un module de télécommande (240) configuré pour transmettre une instruction de télécommande identifiée par l'option sélectionnée au dispositif de la pluralité de dispositifs différents dans le réseau domestique (110) correspondant à l'instruction de télécommande pour l'option sélectionnée,
dans lequel l'instruction de télécommande identifie le dispositif pour lequel l'instruction de télécommande doit être exécutée ;
dans lequel le dispositif mobile (140) inclut :
- une interface cellulaire (141) configurée pour envoyer l'indication de l'option sélectionnée par le biais du réseau cellulaire au réseau de source de contenu (120), et
- une interface directe (142) à connecter au dispositif de la pluralité de dispositifs différents lorsque le dispositif mobile (140) est connecté au réseau domestique (110), dans lequel l'interface directe (142) est une interface Bluetooth ou Wi-Fi ;
- dans lequel, lors de la connexion au réseau domestique (110), le dispositif mobile (140) est configuré pour envoyer des instructions de télécommande directement au dispositif de la pluralité de dispositifs différents par le biais de l'interface directe (142).

2. Système (100) selon la revendication 1, comprenant en outre :
un stockage de données (122) stockant une pluralité de contenu multimédia et un catalogue du contenu multimédia stocké, et les données converties transmises au dispositif mobile (140) incluent le catalogue.

3. Système (100) selon la revendication 2, dans lequel l'option de sélectionner un contenu multimédia inclut l'identification d'un contenu multimédia provenant du catalogue.

4. Système (100) selon la revendication 2 ou 3, dans lequel le module de transmission de contenu multimédia (230) est configuré pour récupérer le contenu multimédia du stockage de données (122) en utilisant l'identification du contenu multimédia dans l'option sélectionnée pour la transmission au réseau domestique (110).

5. Système (100) selon la revendication 1, dans lequel le dispositif mobile (140) est configuré pour présenter le catalogue des instructions de télécommande à l'utilisateur, et chaque option d'envoyer une instruction de télécommande inclut une identification d'au moins une des instructions de télécommande provenant du catalogue des instructions de télécommande.

6. Système (100) selon l'une quelconque des revendications précédentes, dans lequel les différents dispositifs devant être commandés par les instructions de télécommande comprennent une télévision (111), un décodeur (112), un enregistreur vidéo numérique et un lecteur de DVD.

7. Système (100) selon l'une quelconque des revendications précédentes, dans lequel le réseau de source de contenu (120) inclut un réseau IPTV.

8. Procédé pour interfacer un dispositif mobile (140) avec un réseau de source de contenu (120) et un réseau domestique (110), le procédé comprenant :
convertir des données du réseau de source de contenu (120) en un format de sortie supporté par un réseau cellulaire (130) accouplé au dispositif mobile (140),
- dans lequel les données converties incluent une pluralité d'options présentables par le dispositif mobile (140) à un utilisateur, et la pluralité d'options inclut une option de sélectionner un contenu multimédia et de multiples options d'envoyer des instructions de télécommande devant être relayées à un réseau domestique (110) de l'utilisateur pour commander une pluralité de dispositifs différents dans le réseau domestique (110),
- dans lequel la pluralité d'options inclut en outre des options de paiement, une des options de paiement étant de faire un paiement en utilisant un crédit prépayé d'une carte de module d'identité d'abonné du dispositif mobile (140), et
- dans lequel les instructions de télécommande comprennent une instruction d'augmenter le volume, une instruction de changer une sélection d'une chaîne de télévision et une instruction d'allumer ou d'éteindre ;
transmettre les données converties au dispositif mobile (140) par le biais du réseau cellulaire (130) ;
recevoir à travers le réseau cellulaire (130) une indication d'une option sélectionnée de la pluralité d'options du dispositif mobile (140), dans lequel l'option sélectionnée inclut une identification du type de sélection et une description de la sélection ;
déterminer si l'option sélectionnée est l'option de sélectionner un contenu multimédia ou une des multiples options d'envoyer des instructions de télécommande à un dispositif de la pluralité de dispositifs différents ;
en réponse à la détermination que l'option sélectionnée est l'option de sélectionner un contenu multimédia, transmettre un contenu multimédia identifié par l'option sélectionnée au réseau domestique (110), dans lequel la transmission du contenu multimédia inclut une transmission d'au moins un paquet de données ayant un champ d'en-tête avec une adresse de destination correspondant au réseau domestique (110) et un champ de données avec au moins une portion du contenu multimédia ; et
en réponse à la détermination que l'option sélectionnée est une des options d'envoyer des instructions de télécommande, transmettre une instruction de télécommande identifiée par l'option sélectionnée au dispositif de la pluralité de dispositifs différents dans le réseau domestique (110) correspondant à l'instruction de télécommande pour l'option sélectionnée,
- dans lequel l'instruction de télécommande identifie le dispositif pour lequel l'instruction de télécommande doit être exécutée ; et
dans lequel le dispositif mobile (140) inclut :
- une interface cellulaire (141) configurée pour envoyer l'indication de l'option sélectionnée par le biais du réseau cellulaire au réseau de source de contenu (120), et
- une interface directe (142) à connecter au dispositif de la pluralité de dispositifs différents lorsque le dispositif mobile (140) est connecté au réseau domestique (110), dans lequel l'interface directe (142) est une interface Bluetooth ou Wi-Fi ;
- dans lequel, lors de la connexion au réseau domestique (110), le dispositif mobile (140) est configuré pour envoyer des instructions de télécommande directement au dispositif de la pluralité de dispositifs différents par le biais de l'interface directe (142).

9. Procédé selon la revendication 8, comprenant en outre :
stocker un catalogue de contenu multimédia stocké dans le réseau de source de contenu (120), dans lequel les données converties transmises au dispositif mobile (140) incluent le catalogue de contenu multimédia.

10. Procédé selon la revendication 8 ou 9, dans lequel le procédé est réalisé dans le réseau de source de contenu (120).

11. Support de stockage lisible par ordinateur incluant des instructions qui, lors de leur exécution par un système informatique (100), réalisent un procédé comprenant :
convertir des données d'un réseau de source de contenu (120) en un format de sortie supporté par un réseau cellulaire (130) accouplé à un dispositif mobile (140),
- dans lequel les données converties incluent une pluralité d'options présentables par le dispositif mobile (140) à un utilisateur, et la pluralité d'options inclut une option de sélectionner un contenu multimédia et de multiples options d'envoyer des instructions de télécommande devant être relayées à un réseau domestique (110) de l'utilisateur pour commander une pluralité de dispositifs différents dans le réseau domestique (110),
- dans lequel la pluralité d'options inclut en outre des options de paiement, une des options de paiement étant de faire un paiement en utilisant un crédit prépayé d'une carte de module d'identité d'abonné du dispositif mobile (140), et
- dans lequel les instructions de télécommande comprennent une instruction d'augmenter le volume, une instruction de changer une sélection d'une chaîne de télévision et une instruction d'allumer ou d'éteindre ;
transmettre les données converties au dispositif mobile (140) par le biais du réseau cellulaire (130) ;
recevoir à travers le réseau cellulaire (130) une indication d'une option sélectionnée de la pluralité d'options du dispositif mobile (140), dans lequel l'option sélectionnée inclut une identification du type de sélection et une description de la sélection ;
déterminer si l'option sélectionnée est l'option de sélectionner un contenu multimédia ou une des multiples options d'envoyer des instructions de télécommande à un dispositif de la pluralité de dispositifs différents ;
en réponse à la détermination que l'option sélectionnée est l'option de sélectionner un contenu multimédia, transmettre un contenu multimédia identifié par l'option sélectionnée au réseau domestique (110), dans lequel la transmission du contenu multimédia inclut une transmission d'au moins un paquet de données ayant un champ d'en-tête avec une adresse de destination correspondant au réseau domestique (110) et un champ de données avec au moins une portion du contenu multimédia ; et
en réponse à la détermination que l'option sélectionnée est une des multiples options d'envoyer des instructions de télécommande, transmettre une instruction de télécommande identifiée par l'option sélectionnée au dispositif de la pluralité de dispositifs différents dans le réseau domestique (110) correspondant à l'instruction de télécommande pour l'option sélectionnée,
- dans lequel l'instruction de télécommande identifie le dispositif pour lequel l'instruction de télécommande doit être exécutée ; et
dans lequel le dispositif mobile (140) inclut :
- une interface cellulaire (141) configurée pour envoyer l'indication de l'option sélectionnée par le biais du réseau cellulaire au réseau de source de contenu (120), et
- une interface directe (142) à connecter au dispositif de la pluralité de dispositifs différents lorsque le dispositif mobile (140) est connecté au réseau domestique (110), dans lequel l'interface directe (142) est une interface Bluetooth ou Wi-Fi ;
- dans lequel, lors de la connexion au réseau domestique (110), le dispositif mobile (140) est configuré pour envoyer des instructions de télécommande directement au dispositif de la pluralité de dispositifs différents par le biais de l'interface directe (142).
